# EUROPÄISCHE PATENTSCHRIFT

(11) **EP 3 107 767 B1**
(45) Veröffentlichungstag und Bekanntmachung des Hinweises auf die Patenterteilung: **18.07.2018**
(21) Anmeldenummer: 14814774.7
(22) Anmeldetag: 16.12.2014
(51) Int. Cl.: B60R 21/231

(54) **SEITENAIRBAG FÜR FAHRZEUGE**
SIDE AIRBAG FOR VEHICLE
COUSSIN D'AIR LATÉRAL POUR VÉHICULE

(30) Priorität: 21.02.2014 DE 102014002536
(43) Veröffentlichungstag der Anmeldung: 28.12.2016
(73) Patentinhaber: Audi AG, 85045 Ingolstadt (DE)
(72) Erfinder: ATTENBERGER, Michael, 85055 Ingolstadt (DE)
(86) Internationale Anmeldenummer: PCT/EP2014/003364
(87) Internationale Veröffentlichungsnummer: WO 2015/124164

(56) Entgegenhaltungen:
- WO-A1-2013/153933
- DE-A1-102011 079 852
- US-A1- 2012 013 107

## Beschreibung

Die Erfindung betrifft ein Verfahren zum Falten eines Seitenairbags für Fahrzeuge.

In Fahrzeugen sind zum Schutz der Fahrzeuginsassen bei einem Seitenaufprall oder einem Überschlag Seitenairbags vorgesehen, deren Gassack mittels eines von einem Gasgenerator pyrotechnisch erzeugten Gas befüllt wird. Ein solcher Seitenairbag entfaltet sich in der Regel aus einem seitlichen Bereich einer Fahrzeugsitzlehne oder aus einer Seitenverkleidung des Fahrzeugs, so dass sich der aufgeblasene Gassack im Bereich zwischen dem Fahrzeuginsassen, bspw. dem Fahrer und der Seitenwand des Fahrzeugs erstreckt, so dass hierdurch der Bereich der Schulter und der Taille, gegebenenfalls auch der Kopf des Fahrers geschützt wird.

Ein solcher Seitenairbag ist bspw. aus der gattungsbildenden DE 10 2012 224 178 A1 bekannt, dessen Gassack im gefalteten Zustand in der Lehne eines Fahrzeugsitzes montiert ist. Dieser Gassack besteht aus einer ersten und zweiten Materiallage, die einerseits entlang jeweils eines ersten Randabschnittes mittels einer die Kammer teilweise begrenzenden ersten Naht verbunden sind und andererseits über entlang von zweiten Randabschnitten mittels einer die Kammer zusätzlich zur ersten Naht begrenzenden und zur ersten Naht quer verlaufenden zweiten Naht verbunden ist.
Damit wird in bestimmten Bereichen ausreichende Gassackdicke dadurch erreicht, dass die zweiten Randabschnitte nicht entsprechend dem Verlauf der ersten Naht verbunden werden, sondern mit einer hierzu senkrecht bzw. querverlaufenden zweiten Naht, so dass genau in Richtung dieser zweiten Naht sich die ausreichende Gassackdicke bildet. Mit der ersten Naht erhält der Gassack im aufgeblasenen Zustand eine in Fahrzeughochrichtung verlaufende Schlauchform, wobei wenigstens eine der Schlauchenden dieser Schlauchform mittels der querverlaufenden zweiten Naht verschlossen wird.

Ferner ist auch aus der DE 10 2011 079 852 A1 ein Seitenairbag bekannt, welcher eine Kopfkammer und eine Thoraxkammer aufweist, die über einen eingeschnürten Bereich miteinander verbunden sind. Dieser Seitenairbag setzt sich aus einer ersten und zweiten Lage zusammen, die mit einer ersten Naht in Form einer Umfangsnaht verbunden sind und sich sowohl im Bereich der Kopfkammer als auch der Thoraxkammer erstreckt. Der Seitenairbag weist zusätzlich zu der ersten Naht eine zweite Naht auf, die senkrecht zu der ersten Naht orientiert ist. Diese zweite Naht begrenzt neben der ersten Naht die Kopfkammer des Seitenairbags. Durch die Orientierung dieser zweiten Naht wird die Gassackdicke senkrecht zur Ebene, in der sich die erste Naht erstreckt, vergrößert.

Schließlich beschreibt die US 2012/013107 A1 einen Seitenairbag für ein Fahrzeug, welcher aus einer Rückenlehne eines Fahrzeugsitzes entfaltet wird. Dieser Seitenairbag umfasst zwei Seitenteile, die zusammen mit einem stirnseitigen Teil über entsprechende Umfangsnähte verbunden sind. Ferner weist dieser Seitenairbag ein Abstützkissen auf, welches im aufgeblasenen Zustand des Seitenairbags den Arm eines Fahrers abstützt. Dieses Abstützkissen besteht aus zwei Teilen, die mit teilweise senkrecht zu den Umfangsnähten verlaufenden Nähten vernäht und über Überströmöffnungen mit den beiden Seitenteilen und dem stirnseitigen Teil strömungsverbunden sind.

Aufgabe der Erfindung ist es ein einfaches Verfahren zum Falten des aus der WO 2013/153933 A1 bekannten Seitenairbags anzugeben.

Die Aufgabe wird gelöst durch ein Verfahren zum Falten eines Seitenairbags mit den Merkmalen des Patentanspruchs 1.

Dieses Verfahren zeichnet sich erfindungsgemäß dadurch aus, dass:
- in einem Verfahrensschritt eine ersten und einer zweiten Materiallage zur Bildung eines wenigstens eine mit Gas aufblasbare Kammer aufweisenden Gassackes bereitgestellt werden, wobei
   - im aufgeblasenen Zustand des Gassackes sich die erste Materiallage in Fahrzeuglängsrichtung erstreckt und die zweite Materiallage der ersten Materiallage gegenüberliegt und wobei die erste und zweite Materiallage entlang zumindest jeweils eines ersten Randabschnittes miteinander verbunden sind,
   - im aufgeblasenen Zustand des Gassackes die erste und zweite Materiallage einerseits jeweils mit einem in Fahrzeughochrichtung verlaufenden, ersten Randabschnitt und andererseits jeweils mit einem in der von der Fahrzeuglängsrichtung und der Fahrzeugquerrichtung (y-Richtung) aufgespannten Ebene verlaufenden, zweiten Randabschnitt ausgebildet sind,
   - die erste und zweite Materiallage einerseits entlang jeweils eines ersten Randabschnittes mittels einer die Kammer teilweise begrenzenden ersten Naht verbunden sind und andererseits über entlang von zweiten Randabschnitten mittels einer die Kammer zusätzlich zur ersten Naht begrenzenden und zur ersten Naht quer verlaufenden zweiten Naht verbunden ist,
- in einem weiteren Verfahrensschritt die beiden Materiallagen flach aufeinandergelegt werden, wobei der Bereich der zweiten Naht unter Ausbildung einer Spitze in einer ersten Richtung in das Innere des Gassackes gestülpt ist,
- in einem weiteren Verfahrensschritt das der Spitze gegenüberliegenden Ende der beiden Materiallagen in der ersten Richtung mehrfach eingeschlagen wird,
- in einem weiteren Verfahrensschritt die Spitze umgeschlagen und der umgeschlagene Bereich in der ersten Richtung in das Innere des Gassackes gestülpt wird,
- in einem weiteren Verfahrensschritt ein Gasgenerator in der ersten Richtung in die beiden Materiallagen eingeschoben wird, und
- in einem weiteren Verfahrensschritt mit dem dem Gasgenerator gegenüberliegenden Ende beginnend eine Rollfaltung in einer quer zur ersten Richtung verlaufenden zweiten Richtung durchgeführt wird.

Die Erfindung wird nachfolgend anhand eines Ausführungsbeispiels zum Falten eines Seitenairbags unter Bezugnahme auf die beigefügten Figuren ausführlich beschrieben. Es zeigen:
- Figur 1: eine perspektivische Darstellung eines an einem Fahrzeugsitz angebundenen Seitenairbags mit einem aufgeblasenen Gassack gemäß der Erfindung,
- Figur 2: eine perspektivische Darstellung des Seitenairbags gemäß Figur 1 in einer anderen Perspektive,
- Figur 3: eine Darstellung der Abwicklung des Gassackes gemäß den Figuren 1 und 2,
- Figur 4: eine schematische Darstellung des Seitenairbags nach Figur 1 im nicht aufgeblasenen Zustand des Gassackes mit einer Sicht auf die Rückseite des Fahrzeugsitzes,
- Figur 5: eine perspektivische Darstellung des Gassackes des Seitenairbags nach Figur 1 nicht aufgeblasenen Zustand auf einer Unterlage liegend,
- Figur 6: eine weitere perspektivische Darstellung des Gassackes des Seitenairbags nach Figur 1 im nicht aufgeblasenen Zustand,
- Figur 7: eine Darstellung des Gassackes des Seitenairbags nach Figur 1 mit flach aufgelegten Materiallagen,
- Figur 8: eine Darstellung des Gassackes des Seitenairbags nach Figur 7 im Zustand eines ersten Faltungsschrittes,
- Figur 9: eine Darstellung des Gassackes nach Figur 8 im Zustand eines weiteren Faltungsschrittes,
- Figur 10: eine Darstellung des Gassackes nach Figur 9 im Zustand eines weiteren Faltungsschrittes,
- Figur 11: eine Darstellung des Gassackes nach Figur 10 im Zustand eines weiteren Faltungsschrittes,
- Figur 12: eine Darstellung des Gassackes nach Figur 11 in einer anderen Perspektive,
- Figur 13: eine Darstellung des Gassackes nach Figur 11 mit einem Gasgenerator,
- Figur 14: eine Darstellung des Gassackes nach Figur 13 im Zustand eines weiteren Faltungsschrittes,
- Figur 15: eine Darstellung eines als Gassackpaket vollständig gefalteten Gassackes.

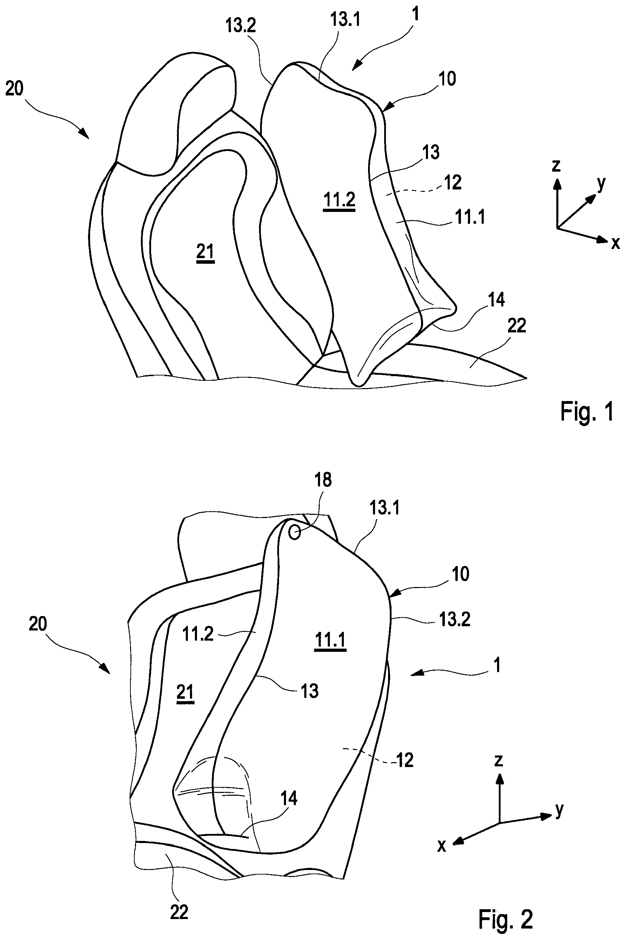

Die Figuren 1 und 2 zeigen einen Fahrzeugsitz 20 eines Fahrzeugs (nicht dargestellt) mit einer Rückenlehne 21 und einem Sitzkissen 22, wobei in der Rückenlehne 21 ein Seitenairbag 1 mit einem Gassack 10 und einem Gasgenerator angeordnet ist. Dieser Gassack 10 ist in den Figuren 1 und 2 in einem aufgeblasenen Zustand dargestellt und erstreckt sich ausgehend von einem äußeren Seitenbereich der Rückenlehne 21 in Fahrzeuglängsrichtung (x-Richtung) zwischen einer Seitenwand der Fahrgastzelle des Fahrzeugs und einem auf dem Fahrzeugsitz 20 sich befindenden Fahrzeuginsassen, so dass dessen Schulter- und Hüftbereich abgedeckt werden.

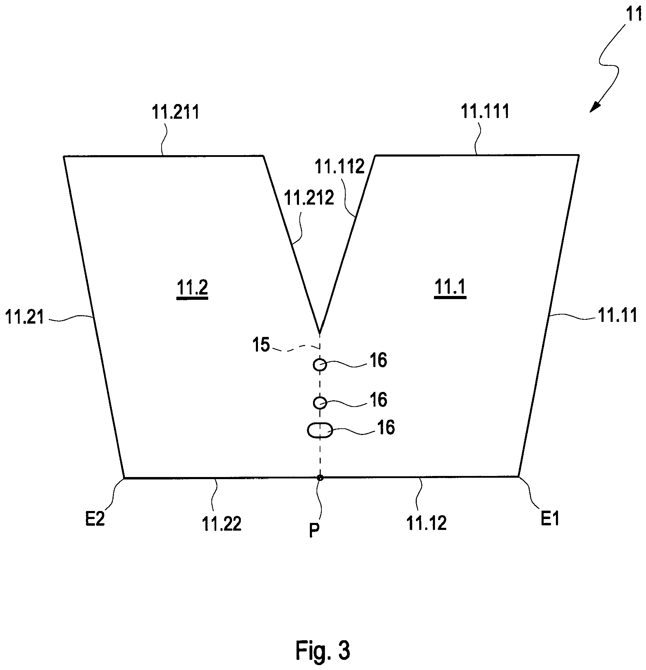

Dieser Gassack 10 besteht aus einer ersten und zweiten Materiallage 11.1 und 11.2, die gemäß Figur 3 als einstückige Gassackmateriallage 11 hergestellt ist. Wie aus den Figuren 1 und 2 ersichtlich ist, erstreckt sich die erste Materiallage 11.1 auf der zum Fahrzeugsitz 20 abgewandten Seite in Fahrzeuglängsrichtung (x-Richtung), während die zweite Materiallage 11.2 gegenüberliegend zur ersten Materiallage 11.1 fahrzeugsitzseitig verläuft. Ferner ist gemäß Figur 2 eine in der ersten Materiallage 11.1 des Gassackes 10 angeordnete Abströmöffnung 18 vorgesehen.

Die einstückige Gassackmateriallage 11 nach Figur 3 besteht in ihrer Abwicklung aus den spiegelsymmetrisch bezüglich einer Faltlinie 15 zueinander angeordneten ersten und zweiten Materiallage 11.1 und 11.2. Im Bereich dieser Faltlinie 15 sind die beiden Materiallagen 11.1 und 11.2 verbunden, ferner sind in diesem Bereich Befestigungsmittel 16 in Form von Öffnungen zur Befestigung eines Gasgenerators vorgesehen. Werden diese beiden Materiallagen 11.1 und 11.2 entlang der Faltlinie 15 aufeinander gefaltet, liegen sie kongruent aufeinander, so dass deren Ränder zur Bildung einer Kammer 12 des Gassackes 10, die mittels des Gasgenerators mit Gas befüllt wird, mittels einer Naht verbunden werden können.

Jeder der beiden Materiallagen 11.1 und 11.2 weisen jeweils einen ersten Randabschnitt 11.11 und 11.21 auf, die, wenn sie miteinander vernäht werden, eine erste Naht 13 bilden, die gemäß den Figuren 1 und 2 im Wesentlichen in Fahrzeughochrichtung (z-Richtung) auf der Vorderseite des Gassackes 10 in Bezug auf das Fahrzeug verläuft. Mit dieser ersten Naht 13 würde die mit Gas befüllte Kammer 12 des Gassackes 10 derart begrenzt, dass sich eine endseitig offene Schlauchform ergibt. Ein offenes Ende dieser Schlauchform endet mit weiteren ersten Randabschnitten 11.111 und 11.112 der ersten Materiallage 11.1 und mit weiteren ersten Randabschnitten 11.211 und 11.212 der zweite Materiallage 11.2. Die weiteren ersten Randabschnitte 11.111 und 11.211 sowie die weiteren ersten Randabschnitte 11.112 und 11.212 werden aufeinandergelegt und entsprechend den ersten Randabschnitten 11.11 und 11.21 zur Bildung von weiteren ersten Nähten 13.1 und 13.2 verbunden. In diesem Zustand bilden diese weiteren ersten Randabschnitte 11.111 und 11.112 sowie 11.211 und 11.212 den in Fahrzeughochrichtung verlaufenden oberen Bereich des Gassackes 10. Dabei verläuft die weitere erste Naht 13.1 im Wesentlichen in der von der Fahrzeuglängsrichtung und der Fahrzeugquerrichtung aufgespannten Ebene, während die weitere erste Naht 13.2 im Wesentlichen in Fahrzeughochrichtung an der rückwärtigen Seite des Gassackes 10 in Bezug auf das Fahrzeug verläuft.

Nachdem die erste Naht 13 und die weiteren ersten Nähte 13.1 und 13.2 hergestellt sind, wird der noch im Bereich der zweiten Randabschnitte 11.12 und 11.22 noch offene Gassack 10 umgestülpt, so dass sich nun die Nahtfahnen dieser Nähte 13, 13.1 und 13.2 im Inneren des Gassackes 10 befinden, wie dies in den Figuren 1 und 2 dargestellt ist.

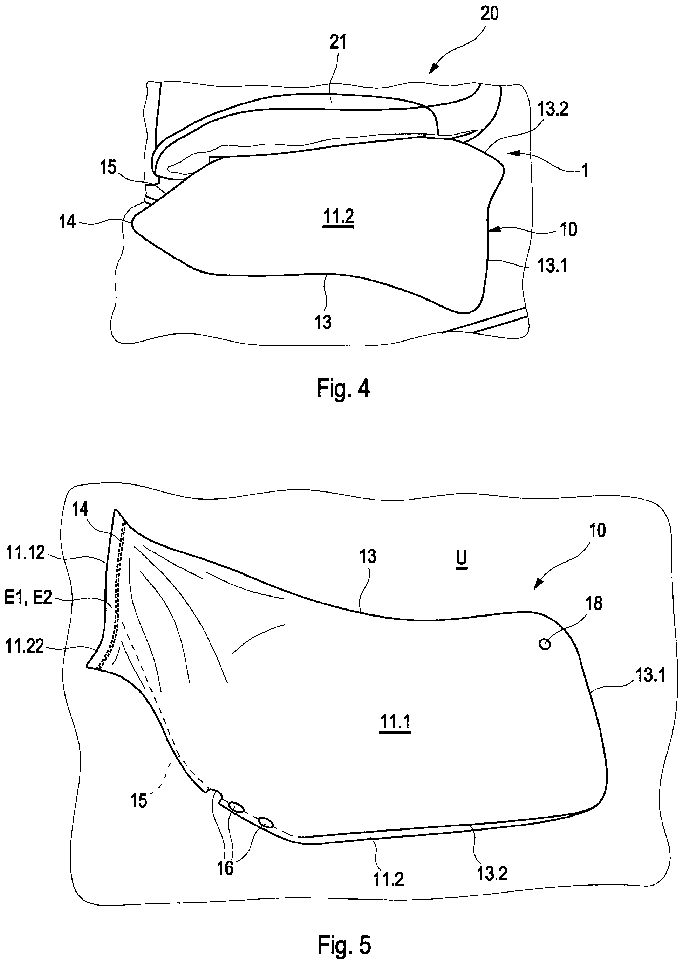

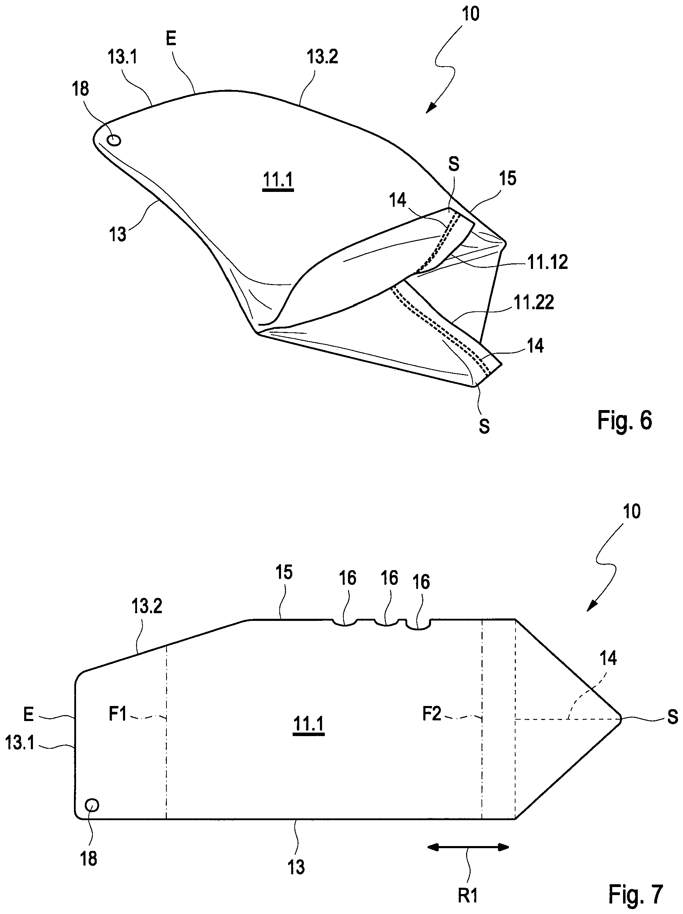

Die nun verbleibenden zweiten Randabschnitte 11.12 und 11.22 werden nach dem Umstülpen des Gassackes 10 jeweils auf sich selbst gefaltet, so dass gemäß Figur 3 die durch die erste Naht 13 verbundenen Ecken E1 und E2 der ersten Materiallage 11.1 und der zweiten Materiallage 11.2 auf den auf der Faltlinie 15 liegenden Punkt P liegen, damit anschließend zur Bildung einer zweiten Naht 14 die zweiten Randabschnitte jeweils vernäht werden können. Die Nahtfahne dieser zweiten Naht 14 bleibt somit außen ist sichtbar (vgl. Figuren 5 und 6) Im aufgeblasenen Zustand des Gassackes 10 verläuft diese so entstandene zweite Naht 14 quer zur ersten Naht 13 bzw. zu den weiteren ersten Nähte 13.1 und 13.2, wie dies aus den Figuren 1 und 2 ersichtlich ist.

Der in dieser Weise hergestellte nicht aufgeblasene Gassack 10 wird in den Figuren 4 und 5 gezeigt, wobei in Figur 4 der Gassack 10 im in die Rückenlehne 21 eingebauten Zustand mit Sicht auf diese Rückenlehne 21 dargestellt ist, während der nicht aufgeblasene Gassack 10 nach Figur 5 auf einer ebenen Unterlage U auffliegt, so dass die erste Naht 13 sowie die weiteren ersten Nähten 13.1 und 13.2 in der Ebene der Unterlage U liegen, jedoch die zweite Naht 14 im Wesentlichen senkrecht auf dieser Unterlage U und somit auch senkrecht auf der von der ersten Naht 13 sowie den weiteren ersten Nähten 13.1 und 13.2 gebildeten Ebene.

Mit einer solchen quer zur ersten Naht 13 verlaufenden zweiten Naht 14 wird anhand Figur 2 ersichtlich, dass in diesem Bereich der zweiten Naht 14 eine Kammer 12 von diesem Gassack 10 gebildet wird, die eine wesentlich größere in Fahrzeugquerichtung (y-Richtung) verlaufende Gassackdicke aufweist, als dies am gegenüberliegenden Ende des Gassackes 10 mit den in der gleichen Ebene wie die erste Naht 13 verlaufenden weiteren Nähten 13.1 und 13.2 der Fall ist. Da der untere von der zweiten Naht 14 gebildete Bereich des Gassackes 10 sich im Hüftbereich eines Fahrzeuginsassen befindet, wird hierdurch ein besonders hoher Schutz bei einem Seitenaufprall erzielt, da insbesondere eine ausreichende Kraftankopplung bzw. eine ausreichende Abstützung an der Seitenwand der Fahrgastzelle des Fahrzeugs erzielt wird.

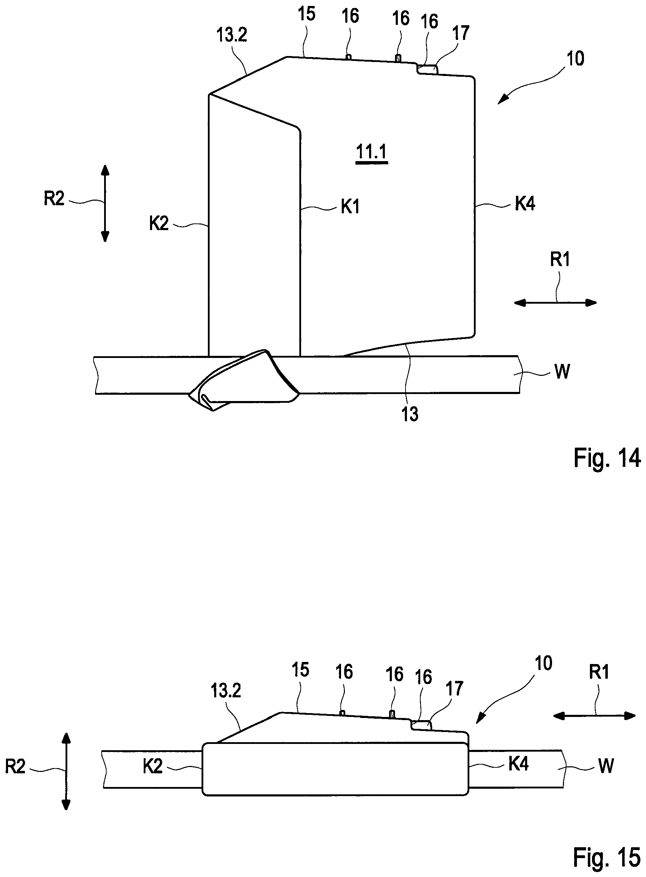

Im Folgenden wird die Faltung des Gassackes 10 zu einem in Figur 15 dargestellten Gassackpaket erläutert, welches in die Rückenlehne 21 des Fahrzeugsitzes 20 gemäß den Figuren 1 und 2 eingebaut wird.

Nach Herstellung der ersten Naht 13 sowie der weiteren ersten Nähte 13.1 und 13.2, dem anschließenden Umstülpen und Herstellen der zweiten Naht 14 werden zunächst vor Beginn der Faltung des Gassackes 10 die beiden Materiallagen 11.1 und 11.2 entlang der Faltlinie 15 aufeinandergelegt, wobei der Bereich der zweiten Falte 14 unter Ausbildung von jeweils einer Spitze S entsprechend von Figur 6 nach innen gefaltet wird und anschließend gemäß Figur 7 die beiden Spitzen S flach aufeinandergelegt werden.

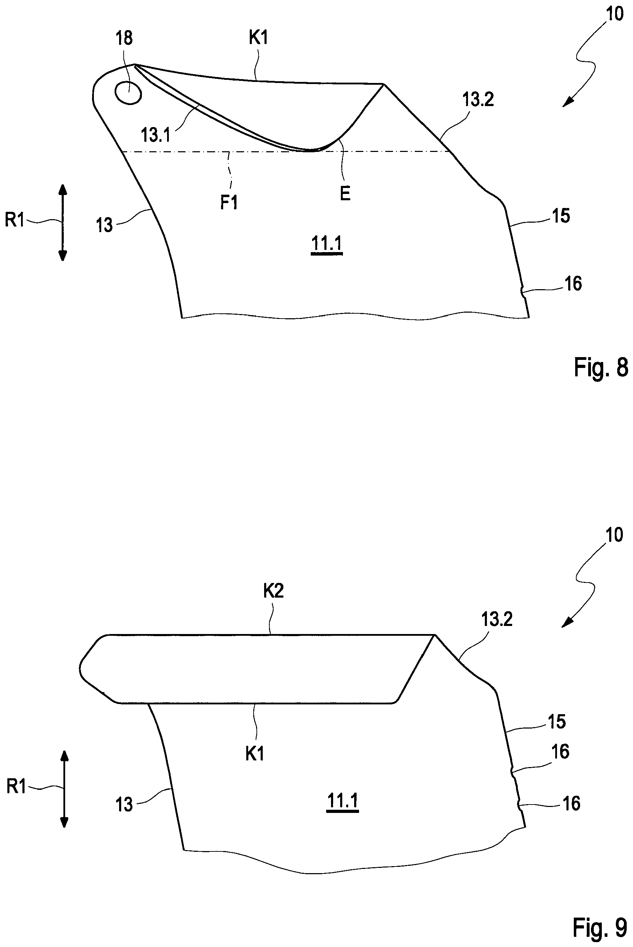

Die Faltung beginnt an dem der Spitze S gegenüberliegenden Ende E des flachgelegten Gassackes 10, das von der weiteren zweiten Falte 13.1 abgeschlossen wird. Dieses Ende E wird unter Bildung einer Faltkante K1 in einer ersten Richtung R1 gemäß Figur 8 bis zu einer Faltlinie F1 umgeschlagen und anschließend gemäß Figur 9 unter Ausbildung einer weiteren Faltkante K2 ein zweites Mal umgeschlagen.

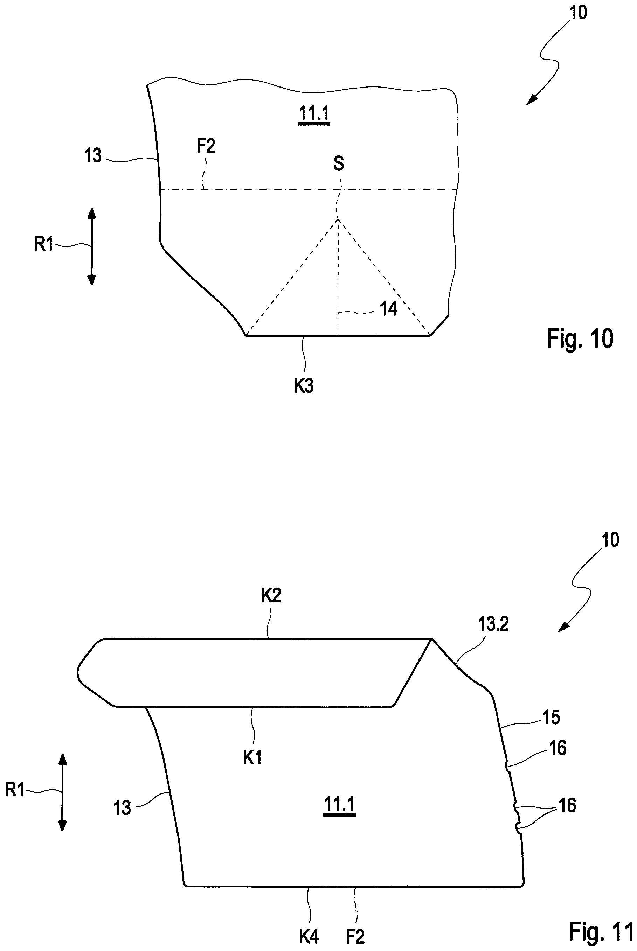

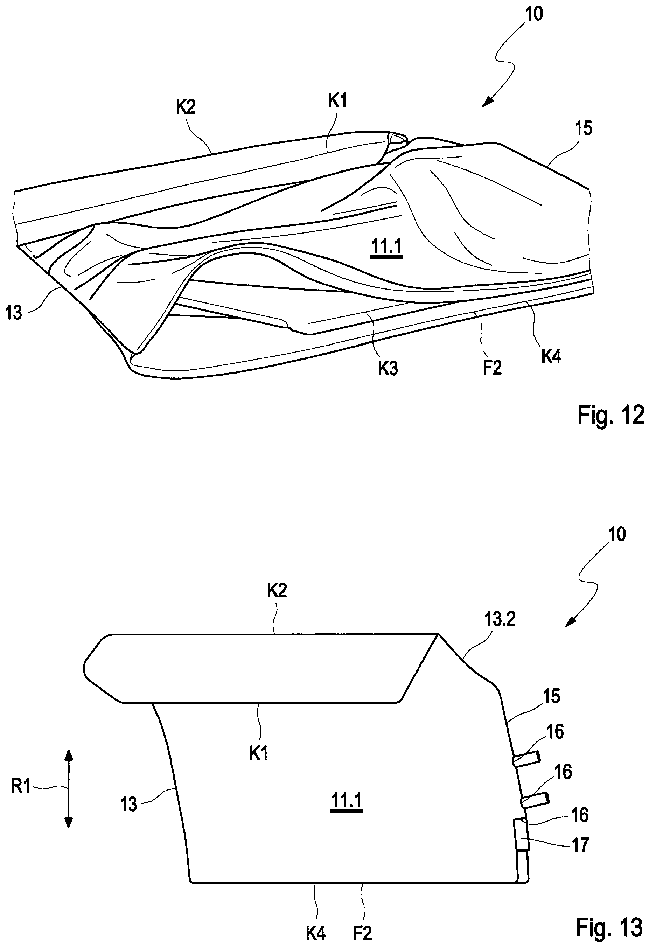

Anschließend wird die Spitze S gemäß Figur 10 unter Bildung einer Faltkante K3 nach unten umgeschlagen und anschließend dieser Bereich mit der Faltkante K3 derart in das Innere des Gassackes 10 bis zu einer Faltlinie F2 unter Bildung einer Faltkante K4 gestülpt, dass die Faltkante K3 mit der Faltkante K4 fluchtet, wie dies aus den Figuren 11 und 12 ersichtlich ist.

In diesem Zustand des gefalteten Gassackes 10 wird im Bereich der Faltkante 15 ein Gasgenerator 17 eingeschoben (vgl. Figur 13). Anschließend wird dieser gefaltete Gassack 10 gemäß Figur 14 in zur ersten Richtung R1 senkrechten Richtung R2 mittels eines Flachstabes W beginnend mit dem Ende, welches der Faltlinie 15 gegenüberliegt, bis zum Gasgenerator 17 aufgerollt. Diesen Zustand des Gassackes 10 zeigt Figur 15 als Gassackpaket, welches in die Rückenlehne 21 des Fahrzeugsitzes 20 gemäß den Figuren 1 und 2 eingebaut wird.

### Bezugszeichen

- 1: Seitenairbag
- 2:
- 10: Gassack des Seitenairbags 1
- 11.1: erste Materiallage des Gassackes 10
- 11.11: erster Randabschnitt der ersten Materiallage 11.1
- 11.111: weiterer erster Randabschnitt der ersten Materiallage 11.1
- 11.112: weiterer erster Randabschnitt der ersten Materiallage 11.1
- 11.12: zweiter Randabschnitt der ersten Materiallage 11.1
- 11.2: zweite Materiallage des Gassackes 10
- 11.21: erster Randabschnitt der zweiten Materiallage 11.2
- 11.211: weiterer erster Randabschnitt der ersten Materiallage 11.2
- 11.112: weiterer erster Randabschnitt der ersten Materiallage 11.2
- 11.22: zweiter Randabschnitt der zweiten Materiallage 11.2
- 11: einstückige Gassackmateriallage des Gassackes 10
- 12: Kammer des Gassackes
- 13: erste Naht des Gassackes 10
- 14: zweite Naht des Gassackes 10
- 15: Faltlinie
- 16: Befestigungsmittel
- 17: Gasgenerator des Seitenairbags 1
- 18: Abströmöffnung des Gassackes 10

- 20: Fahrzeugsitz
- 21: Rückenlehne des Fahrzeugsitzes 20
- 22: Sitzpolster des Fahrzeugsitzes 20

- E1: Ecke der ersten Materiallage 11.1
- E2: Ecke der zweiten Materiallage 11.2
- F1: Faltlinie
- F2: Faltlinie

- K1: Faltkante
- K2: Faltkante
- K3: Faltkante
- K4: Faltkante
- P: Punkt
- R1: erste Richtung
- R2: zweite Richtung

- W: Flachstab
- U: Unterlage

## Patentansprüche

1. Verfahren zum Falten eines Seitenairbags (1),
**dadurch gekennzeichnet, dass**
- in einem Verfahrensschritt eine ersten und einer zweiten Materiallage (11.1, 11.2) zur Bildung eines wenigstens eine mit Gas aufblasbare Kammer (12) aufweisenden Gassackes (10) bereitgestellt wird, wobei
- im aufgeblasenen Zustand des Gassackes (10) sich die erste Materiallage (11.1) in Fahrzeuglängsrichtung (x-Richtung) erstreckt und die zweite Materiallage (11.2) der ersten Materiallage (11.1) gegenüberliegt und wobei die erste und zweite Materiallage (11.1, 11.2) entlang zumindest jeweils eines ersten Randabschnittes (11.11, 11.21) miteinander verbunden sind,
- im aufgeblasenen Zustand des Gassackes (10) die erste und zweite Materiallage (11.1, 11.2) einerseits jeweils mit einem in Fahrzeughochrichtung (z-Richtung) verlaufenden, ersten Randabschnitt (11.11, 11.21) und andererseits jeweils mit einem in der von der Fahrzeuglängsrichtung (x-Richtung) und der Fahrzeugquerrichtung (y-Richtung) aufgespannten Ebene verlaufenden, zweiten Randabschnitt (11.12, 11.22) ausgebildet sind,
- die erste und zweite Materiallage (11.1, 11.2) einerseits entlang jeweils eines ersten Randabschnittes (11.11, 11.21) mittels einer die Kammer (12) teilweise begrenzenden ersten Naht (13) verbunden sind und andererseits über entlang von zweiten Randabschnitten (11.2, 11.21) mittels einer die Kammer (12) zusätzlich zur ersten Naht (13) begrenzenden und zur ersten Naht (13) quer verlaufenden zweiten Naht (14) verbunden ist,
- in einem weiteren Verfahrensschritt die beiden Materiallagen (11.1, 11.2) flach aufeinandergelegt werden, wobei der Bereich der zweiten Naht (14) unter Ausbildung einer Spitze (S) in einer ersten Richtung (R1) in das Innere des Gassackes (10) gestülpt wird,
- in einem weiteren Verfahrensschritt das der Spitze (S) gegenüberliegenden Ende (E) der beiden Materiallagen (11.1, 11.2) in der ersten Richtung (R1) mehrfach eingeschlagen wird,
- in einem weiteren Verfahrensschritt die Spitze (S) umgeschlagen wird und der umgeschlagene Bereich in der ersten Richtung (R1) in das Innere des Gassackes (10) gestülpt wird,
- in einem weiteren Verfahrensschritt ein Gasgenerator (17) in der ersten Richtung in die beiden Materiallagen (11.1, 11.2) eingeschoben wird, und
- in einem weiteren Verfahrensschritt mit dem dem Gasgenerator (17) gegenüberliegenden Ende beginnend eine Rollfaltung in einer quer zur ersten Richtung (R1) verlaufenden zweiten Richtung (R2) durchgeführt wird.

## Claims

1. Method for folding a side airbag (1),
**characterised in that**
- in a method step, a first and a second material layer (11.1, 11.2) is provided to form a gas bag (10) having at least one gas-inflatable chamber (12), wherein
- In the inflated state of the airbag (10), the first material layer (11.1) extends in the vehicle longitudinal direction (x-direction) and the second material layer (11.2) is opposite the first material layer (11.1) and wherein the first and second material layers (11.1, 11.2) are interconnected along at least one respective first edge portion (11.11, 11.21),
- in the inflated state of the airbag (10), the first and second material layers (11.1, 11.2) are formed on the one hand each with a first edge portion (11.11, 11.21), extending in the vehicle vertical direction (z-direction), and on the other hand each with a second edge portion (11.12, 11.22), extending in the plane spanned by vehicle's longitudinal direction (x-direction) and vehicle's transverse direction (y-direction),
- the first and second material layers (11.1, 11.2) on the one hand are connected along each of a first edge portion (11.11, 11.21) by means of a first seam (13) partially delimiting chamber (12) and on the other hand is connected via a second seam (14) extending transversely to the first seam (13) and in addition to the first seam (13) delimiting the chamber (12) along second edge portions (11.2, 11.21),
- In a further process step, the two layers of material (11.1, 11.2) are placed flat on each other, wherein the portion of the second seam (14) under the formation of a tip (S) in a first direction (R1) in the interior of the airbag (10) is turned over,
- in a further process step, the end (E) opposite the tip (S) of the two material layers (11.1, 11.2) in the first direction (R1) is knocked in multiple times,
- in a further process step, the tip (S) is turned over and the turned over portion in the first direction (R1) is turned into the interior of the airbag (10),
- in a further process step, a gas generator (17) in the first direction is inserted inside the two material layers (11.1, 11.2), and
- in a further process step, starting with the end opposite the gas generator (17), rolling and folding is performed in a second direction (R2) extending transversely to the first direction (R1).

## Revendications

1. Procédé de pliage d'un airbag latéral (1),
**caractérisé en ce que**
- dans une étape de procédé une première et une seconde couche de matériau (11.1, 11.2) sont mises à disposition pour la formation d'au moins un coussin à gaz (10) présentant une chambre (12) gonflable avec du gaz, dans lequel
- dans l'état gonflé du coussin à gaz (10) la première couche de matériau (11.1) s'étend dans le sens longitudinal du véhicule (sens x) et la seconde couche de matériau (11.2) est opposée à la première couche de matériau (11.1) et dans lequel la première et seconde couche de matériau (11.1, 11.2) sont raccordées entre elles le long d'au moins respectivement une première section de bord (11.11, 11.21),
- dans l'état gonflé du coussin à gaz (10) les première et seconde couches de matériau (11.1, 11.2) sont réalisées d'une part respectivement avec une première section de bord (11.11, 11.21) s'étendant dans le sens vertical du véhicule (sens z) et d'autre part respectivement avec une seconde section de bord (11.12, 11.22) s'étendant dans le plan défini par le sens longitudinal du véhicule (sens x) et le sens transversal du véhicule (sens y),
- les première et seconde couches de matériau (11.1, 11.2) sont raccordées d'une part le long respectivement d'une première section de bord (11.11, 11.21) au moyen d'une première couture (13) délimitant partiellement la chambre (12) et est raccordée d'autre part le long de secondes sections de bord (11.2, 11.21) au moyen d'une seconde couture (14) s'étendant transversalement à la première couture (13) et délimitant les chambres (12) outre la première couture (13),
- dans une autre étape de procédé les deux couches de matériau (11.1, 11.2) sont placées l'une sur l'autre à plat, dans lequel la zone de la seconde couture (14) est repliée en réalisant une pointe (S) dans un premier sens (R1) à l'intérieur du coussin à gaz (10),
- dans une autre étape de procédé l'extrémité (E) opposée à la pointe (S) des deux couches de matériau (11.1, 11.2) est enfoncée de manière multiple dans le premier sens (R1),
- dans une autre étape de procédé la pointe (S) est rabattue et la zone rabattue dans le premier sens (R1) est repliée à l'intérieur du coussin à gaz (10),
- dans une autre étape de procédé un générateur de gaz (17) est inséré dans le premier sens dans les deux couches de matériau (11.1, 11.2), et
- dans une autre étape de procédé en commençant par l'extrémité opposée au générateur de gaz (17) un pliage roulant est réalisé dans un second sens (R2) s'étendant transversalement au premier sens (R1).
